# EUROPÄISCHE PATENTSCHRIFT

(11) **EP 2 646 490 B1**
(45) Veröffentlichungstag und Bekanntmachung des Hinweises auf die Patenterteilung: **07.01.2015**
(21) Anmeldenummer: 11788158.1
(22) Anmeldetag: 28.11.2011
(51) Int. Cl.: C08G 18/40, C08G 18/42, C08G 18/48, C08G 18/76, C08G 63/183, C08G 63/668, C08G 101/00

(54) **POLYESTERPOLYOLE AUF BASIS AROMATISCHER DICARBONSÄUREN**
POLYESTER POLYOLS BASED ON AROMATIC DICARBOXYLIC ACIDS
POLYOLS DE POLYESTER À BASE D'ACIDES DICARBOXYLIQUES AROMATIQUES

(30) Priorität: 02.12.2010 EP 10193476
(43) Veröffentlichungstag der Anmeldung: 09.10.2013
(73) Patentinhaber: BASF SE, 67056 Ludwigshafen (DE)
(72) Erfinder: GEHRINGER, Lionel, F-67470 Schaffhouse-pres-Seltz (FR); KAMPF, Gunnar, 32351 Stemwede-Haldem (DE); BALBO BLOCK, Marco, 49074 Osnabrück (DE)
(86) Internationale Anmeldenummer: PCT/EP2011/071116
(87) Internationale Veröffentlichungsnummer: WO 2012/072540

(56) Entgegenhaltungen:
- WO-A2-2010/043624
- US-A- 3 138 562
- US-B1- 6 664 363

## Beschreibung

Die vorliegende Erfindung betrifft Polyesterpolyole auf Basis aromatischer Dicarbonsäuren, sowie deren Verwendung zur Herstellung von Polyurethanhartschaumstoffen.

Die Herstellung von Polyurethanhartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Beispielhaft genannt sei das Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel. Durch geeignete Wahl der Aufbaukomponenten und ihrer Mengenverhältnisse können Polyurethanschaumstoffe mit sehr guten mechanischen Eigenschaften hergestellt werden.

Im Rahmen der vorliegenden Offenbarung werden die Begriffe "Polyesterpolyol", "Polyesterol", "Polyesteralkohol" und die Abkürzung "PESOL" gleichbedeutend verwendet.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 1003714 bzw. US-A 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind. Dies findet zum Beispiel in WO 2010/043624 Ausdruck.

Auch WO 2010/ 115532 A1 beschreibt die Herstellung von Polyesterpolyolen aus Terephthalsäure und Oligoalkylenoxiden, wodurch Produkte mit verbesserter Flammwidrigkeit erhalten werden sollen. In diesem Dokument werden keine Fettsäuren oder Fettsäurederivate eingesetzt; als Starter werden niedrig-funktionelle Alkohole eingesetzt.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da dadurch die Dosierung und Vermischung deutlich erschwert wird.

Zudem kann es in gewissen konventionellen Systemen zur Herstellung von PU-Hartschaumstoffen, zum Beispiel beim Einsatz von Glycerin als höherfunktionelle Alkohol-Komponente, zu Problemen mit einer unzureichenden Maßhaltigkeit kommen, d.h. das Schaumstoff-Produkt verformt sich nach der Entformung bzw. nach der Druckstrecke bei Verarbeitung nach dem Doppelbandverfahren deutlich.

Auch ist das Problem des Verhaltens von PU-Hartschaumstoffen im Brandfalle bisher nicht für alle Systeme befriedigend gelöst. Beispielsweise kann sich beim Einsatz von Trimethylpropanol (TMP) als höherfunktionelle Alkohol-Komponente im Brandfall eine toxische Verbindung bilden.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche und führen somit oft zu einer optischen Beanstandung des dargestellten Produkts. Eine Verbesserung der Schaumoberfläche vermindert die Häufigkeit des Auftretens solche Oberflächendefekte und führt somit zu einer optischen Verbesserung der Oberfläche von Sandwichelementen.

Es war somit die Aufgabe der vorliegenden Erfindung, wenn möglich alle der genannten Probleme zu vermeiden oder zumindest zu verbessern. Im Einzelnen bedeutet dies, dass es eine Aufgabe der vorliegenden Erfindung war, Polyesterpolyole auf Basis aromatischer Dicarbonsäuren, insbesondere zum Einsatz in einem Herstellungsverfahren für PU-Hartschaumstoffe, bereitzustellen, welche eine niedrige Viskosität aufweisen sollten und bei der Herstellung der PU-Produkte gut dosiert und vermischt werden können. Die Löslichkeit für Treibmittel, wie zum Beispiel Pentan, sollte ebenfalls möglichst gut sein.

Weitere Aufgaben waren zudem, die Maßhaltigkeit der PU-Endprodukte zu verbessern, oder jedenfalls nicht zu verschlechtern, und auch den Flammschutz der Endprodukte zu verbessern, zumindest aber nicht zu verschlechtern. Weiterhin sollte die Verarbeitbarkeit des Schaumsystems im Bezug auf die Ausbildung von Oberflächendefekten verbessert werden.

Überraschender Weise konnte die genannte Aufgabe nun durch Austausch höherfunktioneller Alkohole, wie z. B. Glycerin und/oder TMP, durch alkoxylierte höherfunktionelle Alkohole, wie z.B. alkoxyliertes Glycerin und/ oder alkoxyliertes TMP, gelöst werden.

Der Gegenstand der vorliegenden Erfindung ist somit ein Polyesterpolyol enthaltend das Veresterungsprodukt von
a) 10 bis 70 Mol-% einer Dicarbonsäurezusammensetzung, enthaltend
   a1) zu 50 bis 100 Mol-%, bezogen auf die Dicarbonsäurezusammensetzung a), eine aromatische Dicarbonsäure oder eine Mischung von aromatischen Dicarbonsäuren,
   a2) zu 0 bis 50 Mol-%, bezogen auf die Dicarbonsäurezusammensetzung a), eine oder mehrere aliphatische Dicarbonsäuren,
b) 2 bis 30 Mol-% einer oder mehrerer Fettsäuren und/ oder Fettsäurederivate,
c) 10 bis 70 Mol-% eines oder mehrerer aliphatischer oder cycloaliphatischer Diole mit 2 bis 18C-Atomen oder Alkoxylate derselben,
d) 2 bis 50 Mol-% eines Polyetheralkohols mit einer Funktionalität größer oder gleich 2, bevorzugt größer 2, besonders bevorzugt größer oder gleich 2,2, hergestellt durch Alkoxylierung, bevorzugt durch Ethoxylierung, eines Polyols e) mit einer Funktionalität größer oder gleich 2,
wobei sich die Mol-% der Komponenten a) bis d) zu 100 % addieren, und wobei pro kg Polyesterpolyol mindestens 200 mmol, vorzugsweise mindestens 500 mmol und besonders bevorzugt mindestens 800 mmol an Polyolen d) umgesetzt werden.

In einer Ausführungsform der vorliegenden Erfindung umfasst die Komponente a1) mindestens ein Material aus der Gruppe enthaltend Terephthalsäure, Dimethylterephthalat (DMT), Polyethylenterephthalat (PET), Phthalsäure, Phthalsäureanhydrid (PSA) und Isopththalsäure.

In einer Ausführungsform der vorliegenden Erfindung umfasst die Komponente a1) mindestens ein Material aus der Gruppe enthaltend Terephthalsäure, Dimethylterephthalat (DMT), Polyethylenterephthalat (PET) und Pthalsäureanhydrid (PSA).

In einer Ausführungsform der vorliegenden Erfindung ist die Komponente a2) zu 0 bis 30 Mol-%, bevorzugt 0 bis 10 Mol-%, besonders bevorzugt 0 Mol-%, in der Dicarbonsäurezusammensetzung a) enthalten.

In einer Ausführungsform der vorliegenden Erfindung geht die Komponente b) zu 3 bis 20 Mol-%, besonders bevorzugt zu 5 bis 18 Mol-% in das Veresterungsprodukt ein.

In einer Ausführungsform der vorliegenden Erfindung geht die Komponente c) zu 20 bis 60 Mol-%, bevorzugt zu 25 bis 55 Mol-%, besonders bevorzugt zu 30 bis 40 Mol-% in das Veresterungsprodukt ein.

In einer Ausführungsform der vorliegenden Erfindung geht die Komponente d) zu 2 bis 40 Mol-%, bevorzugt 2 bis 35 Mol-%, besonders bevorzugt zu 20 bis 25 Mol-% in das Veresterungsprodukt ein.

In einer Ausführungsform der vorliegenden Erfindung ist das aliphatische oder cycloaliphatische Diol c) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

In einer bevorzugten Ausführungsform der vorliegenden Erfindung ist das aliphatische Diol c) Diethylenglykol.

In einer Ausführungsform der vorliegenden Erfindung ist die Fettsäure oder das Fettsäurederivat b) ausgewählt aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer bevorzugten Ausführungsform der vorliegenden Erfindung ist die Fettsäure oder das Fettsäurederivat b) Ölsäure und/ oder Sojaäl und/ oder Rapsöl, besonders bevorzugt Ölsäure. Die Fettsäure oder das Fettsäurederivat dient in der Regel dazu, die Treibmittellöslichkeit, zum Beispiel in einem Verfahren zur Herstellung von Polyurethanschaumstoffen, zu verbessern.

In einer Ausführungsform der vorliegenden Erfindung ist der Polyetheralkohol d) ausgewählt aus der Gruppe der Umsetzungsprodukte von Glycerin, Trimethylolpropan (TMP), Pentaerythritol und Mischungen daraus mit einem Alkylenoxid, sowie Polyethylenglykol (PEG).

In einer Ausführungsform der vorliegenden Erfindung ist der Polyetheralkohol d) hergestellt durch Umsetzung eines Polyols e) mit einer Funktionalität größer oder gleich 2, bevorzugt größer 2, mit Ethylenoxid und/ oder Propylenoxid, bevorzugt mit Ethylenoxid.

In einer Ausführungsform der vorliegenden Erfindung besteht der Polyetheralkohol d) aus dem Umsetzungsprodukt von Glycerin mit Ethylenoxid und/ oder Propylenoxid, bevorzugt mit Ethylenoxid.

In einer Ausführungsform der vorliegenden Erfindung besteht der Polyetheralkohol d) aus dem Umsetzungsprodukt von Trimethylolpropan mit Ethylenoxid und/oder Proplyenoxid, bevorzugt mit Ethylenoxid.

In einer Ausführungsform der vorliegenden Erfindung weist der Polyetheralkohol d) eine OH-Zahl im Bereich von 1250 bis 100 mg KOH/g, bevorzugt 950 bis 150 mg KOH/g, besonders bevorzugt 800 bis 240 mg KOH/g auf.

In einer bevorzugten Ausführungsform der vorliegenden Erfindung besteht der Polyetheralkohol d) aus dem Umsetzungsprodukt von Trimethylolpropan oder Glycerin, bevorzugt Trimethylpropan, mit Ethylenoxid, wobei die OH-Zahl des Polyetheralkohols d) im Bereich von 500 bis 650 mg KOH/g liegt.

In einer besonders bevorzugten Ausführungsform der vorliegenden Erfindung besteht der Polyetheralkohol d) aus dem Umsetzungsprodukt von Trimethylolpropan oder Glycerin, bevorzugt Trimethylpropan, mit Ethylenoxid, wobei die OH-Zahl des Polyetheralkohols d) im Bereich von 500 bis 650 mg KOH/g liegt, und das aliphatische oder cycloaliphatische Diol c) Diethylenglykol ist, und die Fettsäure oder das Fettsäurederivat Ölsäure ist.

In einer Ausführungsform der vorliegenden Erfindung wird ein Polyetheralkohol d) mit einer Funktionalität größer 2 eingesetzt, der durch Alkoxylierung eines Polyols e) mit einer Funktionalität größer oder gleich 3 hergestellt wurde.

In einer bevorzugten Ausführungsform der vorliegenden Erfindung weist der erfindungsgemäße Polyesterol eine mittlere Funktionalität von größer oder gleich 2, bevorzugt größer 2, besonders bevorzugt größer 2,2, auf.

Zur Herstellung der erfindungsgemäßen Polyesterpolyole können die organischen, z.B. aliphatischen und vorzugsweise aromatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 2,2, vorzugsweise 1:1,05 bis 2,1 und besonders bevorzugt 1:1,1 bis 2,0 polykondensiert.

Die erhaltenen Polyesterpolyole besitzen vorzugsweise eine Funktionalität von 1,8 bis 4, insbesondere 2 bis 3, und ein Molekulargewicht von 300 bis 3000, vorzugsweise 400 bis 1000 und insbesondere 450 bis 800.

Weiterhin betrifft die Erfindung auch ein Verfahren zur Herstellung von PU-Hartschaumstoffen, wobei im Rahmen der vorliegenden Erfindung mit "PU" (Polyurethan) auch die chemisch eng verwandten "PIR" (Polyisocyanurat)-Kunststoffe gemeint sind.

Insbesondere betrifft die Erfindung ein Verfahren zur Herstellung von Polyurethanhartschaumstoffen durch Umsetzung von
A. organischen und/oder modifizierten organischen Di- und/oder Polyisocyanaten mit
B. den erfindungsgemäßen speziellen Polyesterpolyolen,
C. gegebenenfalls weiteren Polyesterpolyolen,
D. gegebenenfalls Polyetherolen und/oder weiteren Verbindungen mit mindestens zwei gegenüber Isocyanaten reaktiven Gruppen,
E. und gegebenenfalls Kettenverlängerungs- und/oder Vernetzungsmitteln,
F. einem oder mehreren Treibmitteln,
G. Katalysatoren, sowie
H. gegebenenfalls weiteren Hilfsmitteln und/oder Zusatzstoffen, und
I. gegebenenfalls mindestens einem Flammschutzmittel.

Weitere Gegenstände der vorliegenden Erfindung sind auch Polyurethanhartschaumstoffe und Polyisocyanurathartschaumstoffe, erhältlich nach dem erfindungsgemäßen Verfahren, sowie die Verwendung der erfindungsgemäßen Polyesterpolyole zur Herstellung von Polyurethanhartschaumstoffen oder Polyisocyanurathartschaumstoffen.

Zur Herstellung der Polyurethanhartschaumstoffe nach dem erfindungsgemäßen Verfahren finden, neben den oben beschriebenen speziellen Polyesterpolyolen, die an sich bekannten Aufbaukomponenten Verwendung, zu denen im Einzelnen folgendes auszuführen ist.

Als organische und/oder modifizierte organische Polyisocyanate A) kommen die an sich bekannten aliphatischen, cycloaliphatischen, araliphatischen und vorzugsweise die aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Di- und Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch so genannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Di- und/oder Polyisocyanate.

Zur Herstellung von Polyurethan-Hartschaumstoffen wird ganz besonders bevorzugt Polymer-MDI eingesetzt.

Geeignete weitere Polyesterpolyole C) können beispielsweise aus organischen Dicarbonsäuren mit 2 bis 12 Kohlenstoffatomen, vorzugsweise aromatischen oder einem Gemisch aus aromatischen und aliphatischen Dicarbonsäuren, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Therephthalsäure und/oder Isophthalsäure im Gemisch oder alleine verwendet. Als alphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkrnöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkemöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Mit verwendet werden können auch Polyetherpolyole D), die nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bemsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl-und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole, vorzugsweise Polyoxypropylenpolyole und/oder Polyoxyethylenpolyole, besitzen eine Funktionalität von vorzugsweise 2 bis 6 und insbesondere 2 bis 5 und Molekulargewichte von 150 bis 3000, vorzugsweise 200 bis 2000 und insbesondere 250 bis 1000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3,304,273, 3,383,351, 3,523,093), 11 52 536 (GB 10 40 452) und 11 52 537 (GB 987,618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B 011 752 (US 4,304,708), US-A,4,374,209 und DE-A,32 31 497.

Die Polyetherpolyole können ebenso wie die Polyesterpolyole einzeln oder in Form von Mischungen mit verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, Alkylencarbonat oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Die erfindungsgemäßen Polyurethanhartschaumstoffe können unter Mitverwendung von Kettenverlängerungs- und/oder Vernetzungsmitteln (E) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als weitere Verbindungen (D) mit mindestens zwei gegenüber Isocyanat reaktiven Gruppen, also mit mindestens zwei mit Isocyanatgruppen reaktiven Wasserstoffatomen, kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. ß-Diketo-Gruppen, aufweisen.

Sofern zur Herstellung der Polyurethanhartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.-%, bezogen auf das Gewicht der Komponente B), zum Einsatz.

Zu Treibmitteln (F), welche zur Herstellung der Polyurethanhartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Daneben können physikalische Treibmittel wie niedrig siedende Kohlenwasserstoffe eingesetzt werden. Geeignet sind Flüssigkeiten, welche gegenüber den organischen, gegebenenfalls modifizierten Polyisocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Ameisensäure, Chlordifluormethan, Chlordifluorethane, Dichlorfluorethane, alle Pentanisomeren und deren Gemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Die Treibmittel sind entweder ganz oder teilweise in der Polyolkomponente (d.h. B+C+E+F+G+H+I) gelöst oder werden direkt vor dem Verschäumen der Polyolkomponente über einen Statikmischer zudosiert. Für gewöhnlich sind Wasser oder Ameisensäure ganz oder teilweise in der Polyolkomponente gelöst und werden das physikalische Treibmittel (beispielsweise Pentan) und gegebenenfalls der Rest des chemischen Treibmittels "online" dosiert.

Der Polyolkomponente wird in situ Pentan, eventuell Teile des chemischen Treibmittels, teilweise oder komplett die Katalysatoren zudosiert, meist beinhaltet diese jedoch bereits zumindest Anteile davon (mit Ausnahme des Pentans). Die Hilfs- und Zusatzstoffe, wie auch die Flammschutzmittel sind - wenn vorhanden - bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis G).

Dient Wasser als Treibmittel, so wird es vorzugsweise der Aufbaukomponente B) in einer Menge von 0,2 bis 5 Gew.-%, bezogen auf die Aufbaukomponente B), zugesetzt. Der Wasserzusatz kann in Kombination mit dem Einsatz der anderen beschriebenen Treibmittel erfolgen.

Als Katalysatoren (G) zur Herstellung der Polyurethanhartschaumstoffe werden insbesondere Verbindungen verwendet, die die Reaktion der reaktive Wasserstoffatome, insbesondere Hydroxylgruppen, enthaltenden Verbindungen der Komponente B) und gegebenenfalls C) mit den organischen, gegebenenfalls modifizierten Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethyl-imidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylamino-alkyl)hexahydrotriazine, z.B. N, N', N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, CarI Hanser Verlag München, Wien, 1., 2. und 3. Auflage 1966,1983 und 1993, entnommen werden.

Der Reaktionsmischung zur Herstellung der Polyurethanhartschaumstoffe können gegebenenfalls noch weitere Hilfsmittel und/oder Zusatzstoffe (H) zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Misch-polymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-%, bezogen auf 100 Gew.-% der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestem und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis C), einverleibt, wobei jedoch der Gehalt an Matten, Vliesen und Geweben aus natürlichen und synthetischen Fasern Werte bis 80 Gew.-% erreichen kann.

Als Flammschutzmittel (I) können im Allgemeinen die aus dem Stand der Technik bekannten Flammschutzmittel verwendet werden. Geeignete Flammschutzmittel sind beispielsweise nicht einbaubare bromierte Substanzen, bromierte Ester, bromierte Ether (IxoI), oder bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorpropyl)phosphat, Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere flüssige Flammschutzmittel können Phosphate oder Phosphonate wie Diethylethanphosphonat (DEEP), Triethylphosphat (TEP), Dimethylpropylphosphonat (DMPP), Diphenylkresylphosphat (DPK) und andere eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyurethan-Hartschaumstoffe verwendet werden.

Im Allgemeinen hat es sich als zweckmäßig erwiesen, 1 bis 70 Gew.-%, bevorzugt 5 bis 50 Gew.-%., besonders bevorzugt 10 bis 30 Gew.-% der genannten Flammschutzmittel, bezogen auf das Polyolsystem (d. h. Komponenten B+C+D+E+F+G+H+I) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der erfindungsgemäßen Polyurethanhartschaumstoffe werden die organischen und/oder modifizierten organischen Polyisocyanate A), die speziellen Polyesterpolyole B) und gegebenenfalls Polyetherole und/oder weitere Verbindungen mit mindestens zwei gegenüber Isocyanaten reaktiven Gruppen (D) und gegebenenfalls Kettenverlängerungs- und/oder Vernetzungsmittel (E) in solchen Mengen zur Umsetzung gebracht, dass das Äquivalenzverhältnis von NCO-Gruppen der Polyisocyanate A) zur Summe der reaktiven Wasserstoffatome der Komponenten B), gegebenenfalls C) sowie D) bis G), 1 bis 6:1, vorzugsweise 1,1 bis 5:1 und insbesondere 1,2 bis 3,5:1, beträgt.

Die Polyurethanhartschaumstoffe werden vorteilhafter Weise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110°C, vorzugsweise 30 bis 70°C und insbesondere 40 bis 60°C.

Die nach dem erfindungsgemäßen Verfahren hergestellten Polyurethanhartschaumstoffe weisen eine Dichte von 15 bis 300 g/l, vorzugsweise von 20 bis 100 g/l und insbesondere von 25 bis 60 g/l, auf.

### Beispiele

Die vorliegende Erfindung soll durch nachfolgende Beispiele veranschaulicht werden, wobei die Beispiele nur der Veranschaulichung gewisser Aspekte der Erfindung dienen und keinesfalls einschränkend für den Umfang der Erfindung angesehen werden sollten:
Es wurden verschiedene Polyesterole hergestellt:
   Allgemeine Arbeitsvorschrift

In einen 4 Liter-Rundkolben, der mit einem mechanischen Rührer, einem Thermometer und einer Destillationskolonne sowie einem Stickstoffeinleitungsrohr ausgestattet war, wurden die Dicarbonsäure, die Fettsäure oder das Fettderivat, das aliphatische oder cycloaliphatische Diol oder dessen Alkoxylate und das höher funktionelle Polyol gegeben. Nach Zugabe von 300 ppm Titantetrabutylat als Katalysator wird das Gemisch gerührt und auf 240 °C erhitzt, wobei freigesetztes Wasser kontinuierlich abdestilliert wird. Die Umsetzung wird bei 400 mbar durchgeführt. Es wird ein Polyesterol mit einer Säurezahl ≤ 1 mg KOH/g erhalten.

### Vergleichsbeispiel 1

Es werden 1100,0 g Terephthalsäure, 374,5 g Ölsäure, 950,0 g Diethylenglykol und 367,7 g Trimethylolpropan umgesetzt, wobei nach der allgemeinen Arbeitsvorschrift verfahren wird. Es wird ein Polyesterol mit einer OH-Funktionalität von 2,3 und einer Hydroxylzahl von 243 mg KOH/g erhalten.

### Vergleichsbeispiel 2

Es werden 1183,0 g Terephthalsäure, 402,3 g Ölsäure, 869,1 g Diethylenglykol und 327,9 g Glycerin umgesetzt, wobei nach der allgemeinen Arbeitsvorschrift verfahren wird. Es wird ein Polyesterol mit einer OH-Funktionalität von 2,5 und einer Hydroxylzahl von 252 mg KOH/g erhalten.

### Vergleichsbeispiel 3

Es werden 980,0 g Phthalsäureanhydrid, 746,7 g Ölsäure, 912,2 g Diethylenglykol und 532,2 g Trimethylolpropan umgesetzt, wobei nach der allgemeinen Arbeitsvorschrift verfahren wird. Es wird ein Polyesterol mit einer OH-Funktionalität von 2,2 und einer Hydroxylzahl von 244 mg KOH/g erhalten.

### Erfindungsgemäßes Beispiel 1

Es wurden 822,0 g Terephthalsäure, 384,4 g Ölsäure, 748,2 g Diethylenglykol und 748,3 g der Polyetheralkohol A, auf Basis Trimethylolpropan und Ethylenoxid mit einer OH-Funktionalität von 3 und einer Hydroxylzahl von 610 mg KOH/g, nach der allgemeinen Arbeitsvorschrift umgesetzt. Es wurde ein Polyesterol mit einer OH-Funktionalität von 2,3 und einer Hydroxylzahl von 254 mg KOH/g erhalten.

### Erfindungsgemäßes Beispiel 2

Es wurden 681,4 g Terephthalsäure, 376,6 g Ölsäure, 533,2 g Diethylenglykol und 1080,7 g der Polyetheralkohol B, auf Basis Glycerin und Ethylenoxid mit einer OH-Funktionalität von 3 und einer Hydroxylzahl von 535 mg KOH/g, nach der allgemeinen Arbeitsvorschrift umgesetzt. Es wurde ein Polyesterol mit einer OH-Funktionalität von 2,5 und einer Hydroxylzahl von 242 mg KOH/g erhalten.

### Erfindungsgemäßes Beispiel 3

Es wurden 980,0 g Phthalsäureanhydrid, 1120,1 g Ölsäure, 1017,5 g Diethylenglykol und 1638,5 g der Polyetheralkohol A, auf Basis Trimethylolpropan und Ethylenoxid mit einer OH-Funktionalität von 3 und einer Hydroxylzahl von 610 mg KOH/g, nach der allgemeinen Arbeitsvorschrift umgesetzt. Es wurde ein Polyesterol mit einer OH-Funktionalität von 2,2 und einer Hydroxylzahl von 247 mg KOH/g erhalten.

### Erfindungsgemäßes Beispiel 4

Es wurden 980,0 g Phthalsäureanhydrid, 933,4 g Ölsäure, 1245,6 g Diethylenglykol und 2447,7 g der Polyetheralkohol C, auf Basis Trimethylolpropan und Propylenoxid mit einer OH-Funktionalität von 3 und einer Hydroxylzahl von 400 mg KOH/g, nach der allgemeinen Arbeitsvorschrift umgesetzt. Es wurde ein Polyesterol mit einer OH-Funktionalität von 2,2 und einer Hydroxylzahl von 238 mg KOH/g erhalten.

**Tabelle1:**

| | OH-Funktionalität | Hydroxylzahl (mg KOH/g) | Trifunktioneller Alkohol | Viskosität^{25°C} (mPa.s) |
|---|---|---|---|---|
| Vergleichsbeispiel1 | 2,3 | 243 | Trimethylolpropan | 21100 |
| Vergleichsbeispiel2 | 2,5 | 252 | Glycerin | 36800 |
| Vergleichsbeispiel 3 | 2,2 | 244 | Trimethylolpropan | 8500 |
| Erfindungsgemäßes Beispiel 1 | 2,3 | 254 | Polyetheralkohol A | 3200 |
| Erfindungsgemäßes Beispiel 2 | 2,5 | 242 | Polyetheralkohol B | 2300 |
| Erfindungsgemäßes Beispiel 3 | 2,2 | 247 | Polyetheralkohol A | 1100 |
| Erfindungsgemäßes Beispiel 4 | 2,2 | 238 | Polyetheralkohol C | 900 |

Tabelle 1 zeigt, dass die nach dem erfindungsgemäßen Verfahren hergestellten Polyesterole niedriger viskös sind.

### Messmethoden

Die Häufigkeit von Oberflächendefekten wird durch eine optische Methode ermittelt. Bei dieser Methode wird in einem Abstand von einem Millimeter zur unteren Deckschicht, das heißt der Deckschicht, auf der die Polyurethan-Reaktionslösung im Doppelbandverfahren aufgetragen wurde, eine Ebene in eine Schaumprobe gelegt und überstehendes Material abgetrennt. Die so erhaltene Schaumoberfläche wird in einem Öffnungswinkel von 5 ° beleuchtet und die Fläche des Schattenwurfs durch Oberflächendefekte ins Verhältnis mit der gesamten Oberfläche gesetzt. Vorzugsweise ist die Relation von der Fläche mit Schattenwurf zur gesamten Oberfläche kleiner als 5 %, vorzugsweise kleiner als 2,5 % und besonders bevorzugt kleiner als 2 %

### Oberflächendefekte

Die Oberflächendefekte wurden mit dem oben beschriebenen Verfahren bestimmt. Dazu werden die beleuchtete Schaumoberfläche fotografiert. Die Schaumbilder werden anschließend binarisiert und übereinandergelegt. Die integrierte Fläche der schwarzen Bereiche der Binärbilder wird in Relation zu der Gesamtfläche der Bilder gesetzt und stellt somit ein Maß für die Häufigkeit von Oberflächendefekten dar.

Des Weiteren erfolgte eine zusätzliche qualitative Beurteilung der Oberflächenbeschaffenheit der PUR-Hartschäume, wobei die Deckschicht von einer 1 m * 2 m großen Schaumprobe entfernt wurde und die Oberflächen optisch beurteilt wurden.

### Bestimmung der Verarbeitbarkeit:

Die Verarbeitbarkeit wird bestimmt indem die Schaumbildung bei der Verarbeitung betrachtet wird. Bilden sich dabei große Treibmittelblasen, die an der Schaumoberfläche platzen und diese somit aufreißen lassen, wird dieses als "Abbläser" bezeichnet und das System ist nicht störungsfrei verarbeitbar. Ist dieses Störungsbild nicht zu beobachten, ist die Verarbeitung störungsfrei.

### Dicke

Zur Bestimmung der Elementdicke nach der Verschäumung wird ein Sandwichemelement mit 50 µm dicker Aluminiumfolie als Deckschichtmaterial im Doppelbandverfahren hergestellt und 5 Minuten nach der Herstellung die Elementdicke in der Elementmitte bestimmt.

### Rauchgastoxizität

Im Rahmen der Rauchgastoxizität wurde der Gehalt an Trimethylolpropanphosphat (TMPP) im Rauchgas bei einem Schwelbrand bestimmt.

Die Verschwelung der Hartschaumproben wurde in einem Ringofen nach DIN 53436 Teil 1 durchgeführt. Die Versuchsbedingungen waren 300°C Ringofentemperatur, 1 cm/min Vorschub, 120 L/h Luftdurchsatz und 1 g Probeneinwaage.

Die Verschwelungsgase wurden in zwei hintereinander geschaltete, gekühlte Waschflaschen geleitet, die mit Aceton bzw. Aceton/Methoxyethanol befüllt waren. Mittels HRGC-MS wurde die Menge an TMPP in der vereinigten Lösung quantitativ bestimmt (interne Kalibrierung mit reinem TMPP).

### Herstellung von Polyurethan-Hartschaumstoffen (Variante 1):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:190 verschäumt.

### Polyolkomponente:

| | |
|---|---|
| 47,5 Gewichtsteile | Polyesterol gemäß Beispielen bzw. Vergleichsbeispielen |
| 15 Gewichtsteile | Polyetherol, mit einer OHZ von ∼ 490 mg KOH/g hergestellt durch Polyaddition von Propylenoxid an einer Saccharose/Glycerin-Mischung als Startermolekül |
| 10 Gewichtsteile | Polyetherol, bestehend aus dem Ether von Ethylenglykol und Ethylenoxid mit einer Hydroxylfunktionalität von 2 und einer Hydroxylzahl von 200 mg KOH/g |
| 25 Gewichtsteile | Flammschutzmittel Trischlorisopropylphosphat (TCPP) |
| 2,5 Gewichtsteile | Stabilisator Niax Silicone L 6635 (siliconhaltiger Stabilisator) |
| 6,5 Gewichtsteile | Pentan S 80:20 |
| ca. 2,3 Gewichtsteile | Wasser |
| 1,5 Gewichtsteile | Kaliumacetat (47 Gew.-% in Ethylenglykol) |
| ca 1,1 Gewichtsteile | Dimethylcyclohexylamin |

### Isocyanatkomponente:

### 190 Gewichtsteile Lupranat® M50 (polymeres Methylendiphenyldiisocyanat (PMDI), mit einer Viskosität von ca. 500 mPa*s bei 25 °C)

Es wurden 50 mm dicke Sandwichelemente nach dem Doppelbandverfahren hergestellt. Die Rohdichte wurde dabei bei konstanten Pentangehalt von 6,5 Teilen durch Variation des Wassergehalts auf 38 +/- 1 g/L eingestellt. Die Abbindezeit wurde ferner auf 25 +/- 1 s durch Variation des Anteils des Dimethylcyclohexylamins eingestellt.

Die Ergebnisse sind in Tabelle 2 und Tabelle 3 zusammengefasst.

**Tabelle 2: Ergebnisse der Versuche zur Herstellung von 50 mm dicken Sandwichelementen nach dem Doppelbandverfahren**

| Polyesterpolyol: | Vergleichsbeispiel 1 | Erfindungsgemäßes Beispiel 1 |
|---|---|---|
| Bodenstörungen [%]/ optische Beurteilung | 9,5 / schlecht | 1,2 % / gut |
| Verarbeitung | Leichte Abbläser | störungsfrei |

**Tabelle 3: Ergebnisse der Versuche zur Herstellung von 50 mm dicken Sandwichelementen nach dem Doppelbandverfahren**

| Polyesterpolyol: | Vergleichsbeispiel 2 | Erfindungsgemäßes Beispiel 2 |
|---|---|---|
| Bodenstörungen [%]/ optische Beurteilung | 10,2 / schlecht | 2,1 % / gut |
| Verarbeitung | Abbläser | störungsfrei |

Tabelle 2 und 3 zeigen, dass die nach dem erfindungsgemäßen Verfahren hergestellten Polyurethan-Hartschaumstoffe einfacher störungsfrei herzustellen sind.

Ferner wurden mit den Systemen enthaltend das Vergleichsbeispiel 2 und das erfindungsgemäße Beispiel 2 170 mm dicke Sandwichelemente nach dem Doppelbandverfahren hergestellt. Die Rohdichte wurde dabei bei konstanten Pentangehalt von 6,5 Teilen durch Variation des Wassergehalts auf 38 +/- 1 g/L eingestellt. Die Abbindezeit wurde ferner auf 40 +/- 1 s durch Variation des Anteils des Dimethylcyclohexylamins eingestellt.

Die Ergebnisse sind in Tabelle 4 zusammengefasst:

**Tabelle 4: Ergebnisse der Versuche zur Herstellung von 170 mm dicken Sandwichelementen nach dem Doppelbandverfahren**

| Polyesterpolyol: | Vergleichsbeispiel 2 | Erfindungsgemäßes Beispiel 2 |
|---|---|---|
| Elementdicke nach Verschäumung | 187 mm | 177 mm |

Tabelle 4 zeigt, dass durch die Verwendung des erfindungsgemäßen Polyesterols die Maßhaltigkeit des Polyurethansystems deutlich verbessert wird.

### Herstellung von Polyurethan-Hartschaumstoffen (Variante 2):

Weiterhin wurden Prüfplatten nach dem Doppelbandverfahren gemäß folgender Herstellung eines Polyurethan-Hartschaumstoffes (Variante 2) hergestellt.

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:170 verschäumt.

### Polyolkomponente:

| | |
|---|---|
| 58 Gewichtsteile | Polyesterol gemäß Beispielen bzw. Vergleichsbeispielen |
| 10 Gewichtsteile | Polyetherol, bestehend aus dem Ether von Ethylenglykol und Ethylenoxid mit einer Hydroxylfunktionalität von 2 und einer Hydroxylzahl von 200 mg KOH/g |
| 30 Gewichtsteile | Flammschutzmittel Trischlorisopropylphosphat (TCPP) |
| 2 Gewichtsteile | Stabilisator; Tegostab B 8443 (siliconhaltiger Stabilisator) |
| 10 Gewichtsteile | n-Pentan |
| 1,6 Gewichtsteile | Ameisensäure (85%) |
| 2,0 Gewichtsteile | Kaliumformiat (36 Gew.-% in Ethylenglycol) |
| 0,6 Gewichtsteile | Bis(2-dimethylaminoethyl)ether (70 Gew.-% in Dipropylenglykol) |

### Isocyanatkomponente:

### 170 Gewichtsteile Lupranat® M50

Es wurden 50 mm dicke Sandwichelemente nach dem Doppelbandverfahren hergestellt. Die Rohdichte wurde dabei bei konstantem Ameisensäuregehalt durch Variation des Pentangehalts auf 40 +/- 1 g/L eingestellt. Die Abbindezeit wurde ferner auf 25 +/- 1 s durch Variation des Anteils des Bis(2-dimethylaminoethyl)ether (70 Gew.-% in Dipropylenglykol) eingestellt.

Die Komponenten A und B wurden wie angegeben miteinander verschäumt. Die Ergebnisse der Oberflächenbeurteilung und der Verarbeitbarkeit sind in den Tabellen 5 und 6 zusammengefasst.

**Tabelle 5 Ergebnisse der Versuche zur Herstellung von 50 mm dicken Sandwichelementen nach dem Doppelbandverfahren**

| Polyesterpolyol: | Vergleichsbeispiel 1 | Erfindungsgemäßes Beispiel 1 |
|---|---|---|
| Bodenstörungen [%]/ optische Beurteilung | 5,6 / schlecht | 1,8 % / gut |

**Tabelle 6 Ergebnisse der Versuche zur Herstellung von 50 mm dicken Sandwichelementen nach dem Doppelbandverfahren**

| Polyesterpolyol: | Vergleichsbeispiel 2 | Erfindungsgemäßes Beispiel 2 |
|---|---|---|
| Bodenstörungen [%]/ optische Beurteilung | 6,1 / schlecht | 1,6 % / gut |

Tabellen 5 und 6 zeigen, dass die nach dem erfindungsgemäßen Verfahren hergestellten Polyisocyanurat-Hartschaumstoffe einfacher störungsfrei herzustellen sind.

Ferner wurden mit den Systemen enthaltend das Vergleichsbeispiel 2 und das erfindungsgemäße Beispiel 2 170 mm dicke Sandwichelemente nach dem Doppelbandverfahren hergestellt. Die Rohdichte wurde dabei bei konstantem Ameisensäuregehalt durch Variation des Pentangehalts auf 40 +/- 1 g/L eingestellt. Die Abbindezeit wurde ferner auf 40 +/- 1 s durch Variation des Anteils des Bis(2-dimethylaminoethyl)ether (70 Gew.-% in Dipropylenglykol) eingestellt

Die Ergebnisse sind in Tabelle 7 zusammengefasst:

**Tabelle 7: Ergebnisse der Versuche zur Herstellung von 170 mm dicken Sandwichelementen nach dem Doppelbandverfahren**

| Polyesterpolyol: | Vergleichsbeispiel 2 | Erfindungsgemäßes Beispiel 2 |
|---|---|---|
| Elementdicke nach Verschäumung | 188 mm | 176 mm |

Tabelle 7 und zeigt, dass durch die Verwendung des erfindungsgemäßen Polyesterols die Maßhaltigkeit des Polyurethansystems deutlich verbessert wird.

### Herstellung von Polyurethan-Hartschaumstoffen (Variante 3):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:190 verschäumt.

### Polyolkomponente:

| | |
|---|---|
| 48 Gewichtsteile | Polyesterol, bestehend aus dem Veresterungsprodukt von Phthalsäureanhydrid, Diethylenglykol und Ölsäure mit einer Hydroxylfunktionalität von 1,8 und einer Hydroxylzahl von 200 mg KOH/g Polyol. |
| 15 Gewichtsteile | Polyesterol gemäß Beispielen bzw. Vergleichsbeispielen |
| 10 Gewichtsteile | Polyetherol, bestehend aus dem Ether von Ethylenglykol und Ethylenoxid mit einer Hydroxylfunktionalität von 2 und einer Hydroxylzahl von 200 mg KOH/g Polyol. |
| 25 Gewichtsteile | Flammschutzmittel Trischlorisopropylphosphat (TCPP) |
| 2 Gewichtsteile | Stabilisator, basierend auf einem Polysiloxan |
| 9 Gewichtsteile | n-Pentan |
| ca. 1,5 Gewichtsteile | Ameisensäure, 85%ig |
| 2 Gewichtsteile | Kaliumformiat (36 Gew.-% in Ethylenglykol) |
| ca 1,5 Gewichtsteile | Bis-(2-dimethylaminoethyl)ether (70 Gew.-% in Dipropylenglykol) |

### Isocyanatkomponente:

### 190 Gewichtsteile Lupranat® M50

Die Komponenten wurden intensiv vermischt und das Reaktionsgemisch in eine offene Form gegossen, in der das Reaktionsgemisch aufschäumte und aushärtete. Dabei wurde jeweils auf eine konstante Abbindezeit von 45s mittels Variierung der Amineinsatzmenge eingestellt. Die Gesamtrohdichte wurde konstant auf 45 g/L mittels Variierung der Einsatzmenge an Ameisensäure eingestellt.

Die Ergebnisse sind in Tabelle 8 zusammengefasst.

**Tabelle 8 Ergebnisse der Versuche zur Herstellung von freigeschäumten Hartschaumblöcken**

| Polyesterpolyol: | Vergleichsbeispiel 3 | Erfindungsgemäßes Beispiel 3 | Erfindungsgemäßes Beispiel 4 |
|---|---|---|---|
| Verarbeitungsqualität | gut | gut | gut |
| B2-Brandtest nach DIN 4102, Flammhöhe in cm | 7,5 | 7,0 | 8,0 |
| Verbrannte Masse beim Verschwelungsversuch | 0,26 g | 0,25 g | 0,26 g |
| TMPP-Gehalt pro verbrannter Probenmasse | 4423 µg/g | < 100 µg/g | 308 µg/g |

Die Verarbeitungsqualität berücksichtigt die verschiedenen Zeiten, die den Reaktionsverlauf beschreiben, wie Start-, Steig- und Klebfreie Zeit, des Weiteren die maximale Reaktionstemperatur, den Schaumsteigverlauf, das Aushärtungsverhalten sowie die Schaumoberflächenqualität.

Tabelle 8 zeigt, dass die erfindungsgemäßen Beispiele bei gleich guter Verarbeitung, und Brandverhalten wie das Vergleichsbeispiel eine deutlich geringere Freisetzung von toxischem TMPP unter Schwelbedingungen zeigen, dies gilt insbesondere für erfindungsgemäße Polyesterole mit veresterten Polyetherolen basierend auf Ethylenoxid.

## Patentansprüche

1. Polyesterpolyol enthaltend das Veresterungsprodukt von
a. 10 bis 70 Mol-% einer Dicarbonsäurezusammensetzung, enthaltend
a1) zu 50 bis 100 Mol-%, bezogen auf die Dicarbonsäurezusammensetzung a), eine aromatische Dicarbonsäure oder eine Mischung von aromatischen Dicarbonsäuren,
a2) zu 0 bis 50 Mol-%, bezogen auf die Dicarbonsäurezusammensetzung a), eine oder mehrere aliphatische Dicarbonsäuren,
b. 2 bis 30 Mol-% einer oder mehrerer Fettsäuren und/oder Fettsäurederivate,
c. 10 bis 70 Mol-% eines oder mehrerer aliphatischer oder cycloaliphatischer Diole mit 2 bis 18C-Atomen oder Alkoxylate derselben,
d. 2 bis 50 Mol-% eines Polyetheralkohols mit einer Funktionalität größer oder gleich 2, hergestellt durch Alkoxylierung eines Polyols e) mit einer Funktionalität größer oder gleich 2,
wobei sich die Mol-% der Komponenten a) bis d) zu 100 % addieren, und wobei pro kg Polyesterpolyol mindestens 500 mmol, bevorzugt mindestens 800 mmol an Polyolen d) umgesetzt werden, **dadurch gekennzeichnet, dass** der Polyetheralkohol d) mit einer Funktionalität größer oder gleich 2 hergestellt ist durch Umsetzung eines Polyols e) mit einer Funktionalität größer oder gleich 2 mit Ethylenoxid.

2. Polyesterol nach Anspruch 1, wobei die Komponente a1) mindestens ein Material aus der Gruppe enthaltend Terephthalsäure, Dimethylterephthalat (DMT), Polyethylenterephthalat (PET), Phthalsäure, Pthalsäureanhydrid (PSA) und Isopththalsäure umfasst.

3. Polyesterol nach Anspruch 1 oder 2, wobei die Komponente a2) zu 0 bis 30 Mol-% in der Dicarbonsäurezusammensetzung a) enthalten ist.

4. Polyesterol nach einem der Ansprüche 1 bis 3, wobei die Komponente b) zu 3 bis 20 Mol-% in das Veresterungsprodukt eingeht.

5. Polyesterol nach einem der Ansprüche 1 bis 4, wobei die Komponente c) zu 20 bis 60 Mol-% in das Veresterungsprodukt eingeht.

6. Polyesterol nach einem der Ansprüche 1 bis 5, wobei die Komponente d) zu 2 bis 40 Mol-% in das Veresterungsprodukt eingeht.

7. Polyesterol nach einem der Ansprüche 1 bis 6, **dadurch gekennzeichnet, dass** das aliphatische oder cycloaliphatische Diol c) ausgewählt ist aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

8. Polyesterol nach einem der Ansprüche 1 bis 7, **dadurch gekennzeichnet, dass** die Fettsäure oder das Fettsäurederivat b) ausgewählt ist aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

9. Polyesterol nach einem der Ansprüche 1 bis 8, **dadurch gekennzeichnet, dass** der Polyetheralkohol d) ausgewählt ist aus der Gruppe der Umsetzungsprodukte von Glycerin, Trimethylolpropan (TMP), Pentaerythritol und Mischungen daraus mit einem Alkylenoxid, sowie Polyethylenglykol (PEG).

10. Polyesterol nach einem der Ansprüche 1 bis 9, **dadurch gekennzeichnet, dass** der Polyetheralkohol d) aus dem Umsetzungsprodukt von Glycerin mit Ethylenoxid besteht.

11. Polyesterol nach einem der Ansprüche 1 bis 9, **dadurch gekennzeichnet, dass** der Polyetheralkohol d) aus dem Umsetzungsprodukt von Trimethylolpropan mit Ethylenoxid besteht.

12. Polyesterol nach einem der Ansprüche 1 bis 11, **dadurch gekennzeichnet, dass** der Polyetheralkohol d) eine OH-Zahl im Bereich von 1250 bis 100 mg KOH/ g aufweist.

13. Polyesterol nach einem der Ansprüche 1 bis 9 oder 11 bis 12, wobei der Polyetheralkohol d) aus dem Umsetzungsprodukt von Trimethylolpropan mit Ethylenoxid besteht, und wobei die OH-Zahl des Polyetheralkohols d) im Bereich von 500 bis 650 mg KOH/ g liegt.

14. Polyesterol nach einem der Ansprüche 1 bis 13, wobei ein Polyetheralkohol d) mit einer Funktionalität größer 2 eingesetzt wird, hergestellt durch Alkoxylierung eines Polyols e) mit einer Funktionalität größer oder gleich 3.

15. Polyesterol nach einem der Ansprüche 1 bis 14 mit einer mittleren Funktionalität von größer oder gleich 2.

16. Verfahren zur Herstellung von Polyurethanhartschaumstoffen durch Umsetzung von
A. organischen und/oder modifizierten organischen Di- und/oder Polyisocyanaten mit
B. den speziellen Polyesterpolyolen gemäß einem der Ansprüche 1 bis 15,
C. gegebenenfalls weiteren Polyesterpolyolen,
D. gegebenenfalls Polyetherolen und/oder weiteren Verbindungen mit mindestens zwei gegenüber Isocyanaten reaktiven Gruppen und
E. gegebenenfalls Kettenverlängerungs- und/oder Vernetzungsmitteln,
F. einem oder mehreren Treibmitteln,
G. Katalysatoren, sowie
H. gegebenenfalls weiteren Hilfsmitteln und/oder Zusatzstoffen, und
I. gegebenenfalls mindestens einem Flammschutzmittel.

17. Polyurethanhartschaumstoff oder Polyisocyanurathartschaumstoff, erhältlich nach dem Verfahren gemäß Anspruch 16.

18. Verwendung von Polyesterpolyolen gemäß einem der Ansprüche 1 bis 15 zur Herstellung von Polyurethanhartschaumstoffen oder Polyisocyanurathartschaumstoffen.

## Claims

1. A polyester polyol comprising the esterification product of
a. from 10 to 70 mol% of a dicarboxylic acid composition comprising
a1) an amount of from 50 to 100 mol%, based on the dicarboxylic acid composition a), of an aromatic dicarboxylic acid or a mixture of aromatic dicarboxylic acids,
a2) an amount of from 0 to 50 mol%, based on the dicarboxylic acid composition a), of one or more aliphatic dicarboxylic acids,
b. from 2 to 30 mol% of one or more fatty acids and/or fatty acid derivatives,
c. from 10 to 70 mol% of one or more aliphatic or cycloaliphatic diols having from 2 to 18 carbon atoms or alkoxylates thereof,
d. from 2 to 50 mol% of a polyether alcohol having a functionality of greater than or equal to 2 and prepared by alkoxylation of a polyol e) having a functionality of greater than or equal to 2,
where the mol% of components a) to d) add up to 100% and at least 500 mmol, preferably at least 800 mmol, of polyols d) are reacted per kg of polyester polyol, wherein the polyether alcohol d) having a functionality of greater than or equal to 2 has been produced by reacting a polyol e) having a functionality of greater than or equal to 2 with ethylene oxide.

2. The polyesterol according to claim 1, wherein the component a1) comprises at least one material from the group consisting of terephthalic acid, dimethyl terephthalate (DMT), polyethylene terephthalate (PET), phthalic acid, phthalic anhydride (PSA) and isophthalic acid.

3. The polyesterol according to claim 1 or 2, wherein the component a2) is comprised in an amount of from 0 to 30 mol% in the dicarboxylic acid composition a).

4. The polyesterol according to any of claims 1 to 3, wherein the component b) goes into the esterification product to an extent of from 3 to 20 mol%.

5. The polyesterol according to any of claims 1 to 4, wherein the component c) goes into the esterification product to an extent of from 20 to 60 mol%.

6. The polyesterol according to any of claims 1 to 5, wherein the component d) goes into the esterification product to an extent of from 2 to 40 mol%.

7. The polyesterol according to any of claims 1 to 6, wherein the aliphatic or cycloaliphatic diol c) is selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

8. The polyesterol according to any of claims 1 to 7, wherein the fatty acid or the fatty acid derivative b) is selected from the group consisting of castor oil, polyhydroxy fatty acids, ricinoleic acid, hydroxyl-modified oils, grapeseed oil, black cumin oil, pumpkin kernel oil, borage seed oil, soybean oil, wheat germ oil, rapeseed oil, sunflower oil, peanut oil, apricot kernel oil, pistachio oil, almond oil, olive oil, macadamia nut oil, avocado oil, sea buckthorn oil, sesame oil, hemp oil, hazelnut oil, primula oil, wild rose oil, safflower oil, walnut oil, hydroxyl-modified fatty acids and fatty acid esters based on myristoleic acid, palmitoleic acid, oleic acid, vaccenic acid, petroselic acid, gadoleic acid, erucic acid, nervonic acid, linoleic acid, α- and γ-linolenic acid, stearidonic acid, arachidonic acid, timnodonic acid, clupanodonic acid and cervonic acid.

9. The polyesterol according to any of claims 1 to 8, wherein the polyether alcohol d) is selected from the group consisting of reaction products of glycerol, trimethylolpropane (TMP), pentaerythritol and mixtures thereof with an alkylene oxide, and also polyethylene glycol (PEG).

10. The polyesterol according to any of claims 1 to 9, wherein the polyether alcohol d) comprises the reaction product of glycerol with ethylene oxide.

11. The polyesterol according to any of claims 1 to 9, wherein the polyether alcohol d) comprises the reaction product of trimethylolpropane with ethylene oxide.

12. The polyesterol according to any of claims 1 to 11, wherein the polyether alcohol d) has an OH number in the range from 1250 to 100 mg KOH/g.

13. The polyesterol according to any of claims 1 to 9 or 11 to 12, wherein the polyether alcohol d) comprises the reaction product of trimethylolpropane with ethylene oxide and the OH number of the polyether alcohol d) is in the range from 500 to 650 mg KOH/g.

14. The polyesterol according to any of claims 1 to 13, wherein a polyether alcohol d) having a functionality of greater than 2 and prepared by alkoxylation of a polyol e) having a functionality of greater than or equal to 3 is used.

15. The polyesterol according to any of claims 1 to 14 having an average functionality of greater than or equal to 2.

16. A process for producing rigid polyurethane foams by reacting
A. organic and/or modified organic diisocyanates and/or polyisocyanates with
B. the specific polyester polyols according to any of claims 1 to 15,
C. optionally further polyester polyols,
D. optionally polyetherols and/or further compounds having at least two groups which are reactive toward isocyanates and
E. optionally chain extenders and/or crosslinkers,
F. one or more blowing agents,
G. catalysts and also
H. optionally further auxiliaries and/or additives and
I. optionally at least one flame retardant.

17. A rigid polyurethane foam or rigid polyisocyanurate foam which can be obtained by the process according to claim 16.

18. The use of polyester polyols according to any of claims 1 to 15 for producing rigid polyurethane foams or rigid polyisocyanurate foams.

## Revendications

1. Polyesterpolyol contenant le produit d'estérification de
a. 10 à 70% en mole d'une composition d'acide dicarboxylique, contenant
a1) à raison de 50 à 100 % en mole, par rapport à la composition d'acide dicarboxylique a), un acide dicarboxylique aromatique ou un mélange d'acides dicarboxyliques aromatiques,
a2) à raison de 0 à 50 % en mole, par rapport à la composition d'acide dicarboxylique a), un ou plusieurs acides dicarboxyliques aliphatiques, et
b. 2 à 30% en mole d'un ou de plusieurs acides gras et/ou dérivés d'acides gras
c. 10 à 70% en mole d'un ou de plusieurs diols aliphatiques ou cycloaliphatiques comprenant 2 à 18 atomes de carbone ou des alcoxylates de ceux-ci,
d. 2 à 50 % en mole d'un polyétheralcool présentant une fonctionnalité supérieure ou égale à 2, préparé par alcoxylation d'un polyol e) présentant une fonctionnalité supérieure ou égale à 2,
la somme des % en mole des composants a) à d) valant 100% et au moins 500 mmoles, de préférence au moins 800 mmoles de polyols d) étant transformées par kg de polyesterpolyol, **caractérisé en ce que** le polyétheralcool d) présentant une fonctionnalité supérieure ou égale à 2 est préparé par transformation d'un polyol e) présentant une fonctionnalité supérieure ou égale à 2 avec de l'oxyde d'éthylène.

2. Polyesterol selon la revendication 1, le composant a1) comprenant au moins un matériau du groupe contenant l'acide téréphtalique, le téréphtalate de diméthyle (DMT), le poly(téréphtalate d'éthylène) (PET), l'acide phtalique, l'anhydride de l'acide phtalique (PSA) et l'acide isophtalique.

3. Polyesterol selon la revendication 1 ou 2, le composant a2) étant contenu à raison de 0 à 30 % en mole dans la composition d'acide dicarboxylique a).

4. Polyesterol selon l'une quelconque des revendications 1 à 3, le composant b) entrant à raison de 3 à 20 % en mole dans le produit d'estérification.

5. Polyesterol selon l'une quelconque des revendications 1 à 4, le composant c) entrant à raison de 20 à 60 % en mole dans le produit d'estérification.

6. Polyesterol selon l'une quelconque des revendications 1 à 5, le composant d) entrant à raison de 2 à 40 % en mole dans le produit d'estérification.

7. Polyesterol selon l'une quelconque des revendications 1 à 6, **caractérisé en ce que** le diol aliphatique ou cycloaliphatique c) est choisi dans le groupe constitué par l'éthylèneglycol, le diéthylèneglycol, le propylèneglycol, le 1,3-propanediol, le 1,4-butanediol, le 1,5-pentanediol, le 1,6-hexanediol, le 2-méthyl-1,3-propanediol et le 3-méthyl-1,5-pentanediol et leurs alcoxylates.

8. Polyesterol selon l'une quelconque des revendications 1 à 7, **caractérisé en ce que** l'acide gras ou le dérivé d'acide gras b) est choisi dans le groupe constitué par l'huile de ricin, les acides gras à fonctionnalité polyhydroxy, l'acide ricinoléique, les huiles modifiées par hydroxyle, l'huile de pépins de raisin, l'huile de cumin noir, l'huile de pépins de courge, l'huile de graines de bourrache, l'huile de soja, l'huile de graines de blé, l'huile de colza, l'huile de graines de tournesol, l'huile d'arachide, l'huile de noyau d'abricot, l'huile de pistache, l'huile d'amande, l'huile d'olive, l'huile de noix de macadamia, l'huile d'avocat, l'huile d'argousier, l'huile de sésame, l'huile de chanvre, l'huile de noisette, l'huile de primevère, l'huile de rose sauvage, l'huile de carthame, l'huile de noix, les acides gras modifiés par hydroxyle et les esters d'acides gras à base d'acide myristoléique, d'acide palmitoléique, d'acide oléique, d'acide vaccénique, d'acide pétrosélénique, d'acide gadoléique, d'acide érucasique, d'acide nervonique, d'acide linoléique, d'acide α-linolénique et γ-linolénique, d'acide stéaridonique, d'acide arachidonique, d'acide timnodonique, d'acide clupanodonique et d'acide cervonique.

9. Polyesterol selon l'une quelconque des revendications 1 à 8, **caractérisé en ce que** le polyétheralcool d) est choisi dans le groupe des produits de transformation du glycérol, du triméthylolpropane (TMP), du pentaérythritol et de leurs mélanges avec un oxyde d'alkylène ainsi que le polyéthylèneglycol (PEG).

10. Polyesterol selon l'une quelconque des revendications 1 à 9, **caractérisé en ce que** le polyétheralcool d) est constitué du produit de transformation de glycérol avec de l'oxyde d'éthylène.

11. Polyesterol selon l'une quelconque des revendications 1 à 9, **caractérisé en ce que** le polyétheralcool d) est constitué du produit de transformation de triméthylolpropane avec de l'oxyde d'éthylène.

12. Polyesterol selon l'une quelconque des revendications 1 à 11, **caractérisé en ce que** le polyétheralcool d) présente un indice d'OH dans la plage de 1250 à 100 mg de KOH/g.

13. Polyesterol selon l'une quelconque des revendications 1 à 9 ou 11 à 12, le polyétheralcool d) étant constitué par le produit de transformation de triméthylolpropane avec de l'oxyde d'éthylène et l'indice d'OH du polyétheralcool d) étant situé dans la plage de 500 à 650 mg de KOH/g.

14. Polyesterol selon l'une quelconque des revendications 1 à 13, un polyétheralcool d) présentant une fonctionnalité supérieure à 2 étant utilisé, préparé par alcoxylation d'un polyol e) présentant une fonctionnalité supérieure ou égale à 3.

15. Polyesterol selon l'une quelconque des revendications 1 à 14, présentant une fonctionnalité moyenne supérieure ou égale à 2.

16. Procédé pour la production de mousses dures de polyuréthane par transformation
A. de diisocyanates et/ou polyisocyanates organiques et/ou organiques modifiés avec
B. les polyesterpolyols particuliers selon l'une quelconque des revendications 1 à 15,
C. le cas échéant d'autres polyesterpolyols,
D. le cas échéant des polyétherols et/ou d'autres composés présentant au moins deux groupes réactifs par rapport aux isocyanates et
E. le cas échéant des agents d'allongement de chaîne et/ou des réticulants,
F. un ou plusieurs agents gonflants,
G. des catalyseurs et
H. le cas échéant d'autres adjuvants et/ou additifs et
I. le cas échéant au moins un agent ignifuge.

17. Mousse dure de polyuréthane ou mousse dure de polyisocyanurate, pouvant être obtenue selon le procédé selon la revendication 16.

18. Utilisation de polyesterpolyols selon l'une quelconque des revendications 1 à 15 pour la production de mousses dures de polyuréthane ou de mousses dures de polyisocyanurate.
